# EUROPÄISCHE PATENTANMELDUNG

(11) **EP 4 521 686 A1**
(43) Veröffentlichungstag der Anmeldung: **12.03.2025**
(21) Anmeldenummer: 24186083.2
(22) Anmeldetag: 02.07.2024
(51) Int. Cl.: H04L 9/40, G05B 19/042

(54) **VERWENDEN EINES TRAINIERTEN KI-MODELLS IN EINEM VERFAHREN ZUR BENUTZERVERWALTUNG VON FELDGERÄTEN DER AUTOMATISIERUNGSTECHNIK**

(30) Priorität: 11.09.2023 DE 102023124379
(71) Anmelder: Endress+Hauser Conducta GmbH+Co. KG, 70839 Gerlingen (DE)
(72) Erfinder: Alber, Thomas, 70567 Stuttgart (DE); Pöschmann, Axel, 4057 Basel (CH)
(74) Vertreter: Endress + Hauser Group Services (Deutschland) AG+Co. KG

(57) **Zusammenfassung**

Die Erfindung umfasst ein Computerimplementiertes Verfahren zum Trainieren eines KI-Modells, umfassend:
- Bereitstellen von Trainingsdaten, wobei die Trainingsdaten Eingangsdaten und Ausgangsdaten umfassen, wobei die Eingangsdaten Identifikations- und/oder Funktionsdaten einer Vielzahl von Feldgeräten umfassen, und wobei die Ausgangsdaten jeweils ein den Feldgeräten zugeordnetes Ergebnis, ob ein Anmelden an einem Benutzermanagementsystem erlaubt wurde oder nicht, umfassen;
- Zuführen der Trainingsdaten dem KI-Modell; und
- Trainieren des Kl-Modells mittels maschinellen Lernens auf Basis der Trainingsdaten zum Identifizieren von einem oder mehreren Zusammenhängen zwischen den

Identifikations- und/oder Funktionsdaten und den jeweils zugeordneten Ergebnissen, sowie die Verwendung des trainierten Kl-Modells in einem Verfahren zur Benutzerverwaltung von Feldgeräten der Automatisierungstechnik.

## Beschreibung

Die Erfindung betrifft ein Computerimplementiertes Verfahren zum Trainieren eines KI-Modells. Des Weiteren betrifft die Erfindung das Verwenden eines KI-Modells, welches mittels des erfindungsgemäßen Verfahrens trainiert wurde, in einem Verfahren zur Benutzerverwaltung von Feldgeräten der Automatisierungstechnik. Des Weiteren umfasst die Erfindung ein computerlesbares Medium, das Anweisungen kodiert, die ein KI-Modell definieren, das mittels des erfindungsgemäßen Verfahrens eingelernt wurde. Des Weiteren umfasst die Erfindung ein Computersystem, umfassend ein erfindungsgemäßes computerlesbares Medium.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Normalerweise handelt es sich bei den übergeordneten Einheiten um Leitsysteme (DCS) bzw. Steuerungseinheiten, wie beispielsweise eine SPS (speicherprogrammierbare Steuerung). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Auch mobile Bedieneinheiten können für die Bedienung von Feldgeräten verwendet werden, welche eine FDT-Rahmenapplikation implementiert haben. So existieren beispielsweise Bedieneinheiten, welche an das Feldbusnetzwerk angeschlossen werden. Die Bedieneinheit kann aber auch über eine drahtlose Kommunikationsverbindung, insbesondere basierend auf einem Bluetooth-Standard, mit den Feldgeräten kommunizieren. Die Anmelderin produziert und vertreibt Geräte, die als sogenannte Bluetooth-Gateways eine Kopplung der Bedieneinheiten mit den Feldgeräten erlauben. Das Feldgerät wird drahtgebunden, insbesondere unter Verwendung des Kommunikationsstandards HART oder eines proprietären Standards (beispielsweise CDI, mittels welchem Feldgeräte der Anmelderin ansprechbar sind) mit einem Bluetooth-Gateway verbunden. Alternativ verfügen die Feldgeräte selbst über eigene Bluetooth-Schnittstellen.

Im Falle der Verwendung eines mobilen Endgeräts, beispielsweise eines Smartphone oder Tablets, als Bedieneinheit zur Drahtloskommunikation mit den Feldgeräten stehen Anwendungsprogramme, sogenannte Apps zur Verfügung, welche die Bedienfunktionen für das Feldgerät dem mobilen Endgerät zur Verfügung stellen.

Im industriellen Umfeld verfügen die meisten der installierten Feldgeräte über keinen oder nur recht einfachen Schutz vor nicht autorisiertem Zugriff. So kann in diesen Feldgeräten direkt oder beispielsweise nach Eingabe eines Entsperrcodes in der Regel auf alle Geräteparameter zugegriffen werden. Im Zuge des Bundessicherheitsgesetzes kommen nun vermehrt Feldgeräte auf den Markt, welche über individuelle Benutzeraccounts und eine rollenbasierte Autorisierung verfügen. Für den Zugriff über eine Benutzer- oder auch Maschinenschnittstelle ist also eine, in einem gewissen Sinne 'permanente', Autorisierung erforderlich, welche meist durch eine vorausgehende Authentifizierung gewährt wird. Die Autorisierung ist dabei so zu wählen, dass der Zugreifer über (permanent) alle Berechtigungen verfügt, die er zur Durchführung seiner Aufgaben benötigt. Standards, wie die IEC 62443-4-2 fordern, dass eine "Komponente" über eine Möglichkeit zur Authentifizierung der Benutzer haben muss und dass es eine rollenbasierte Gewährung von Berechtigungen (Autorisierung) geben soll.

Aufgrund des dadurch entstehenden immensen Administrationsaufwands der Logindaten der Feldgeräte zeichnen sich Technologien für eine zentrale Benutzerverwaltung ab, wie diese auch im IT-Bereich bezüglich der dortigen IT-Geräte (beispielsweise Drucker, Workstations, etc.) seit Jahren üblich ist. Ein Beispiel eines solchen Konzepts offenbart die DE 10 2018 1026 08 A1, in welcher ein Transportmedium vorgesehen ist, auf welches von einer Benutzerdatenbank Benutzerdaten übertragen werden, wobei nach Überprüfen der Benutzerdaten von dem Feldgerät ein Zugriff auf dieses gewährt wird.

Auch gibt es Ideen zur Begrenzung der von Menschen benötigten Zugriffsberechtigungen auf ein minimales Maß. Die DE 102019131860 A1 beispielsweise offenbart, ein digitales Auftragsticket vorzusehen, welches von einem Server auf das mobile Endgerät übertragen wird und welches Auftragsticket die Zugriffsrechte und die autorisierten Arbeiten für das Feldgerät enthält. Beim Verbindungsaufbau mit dem Feldgerät wird dieses Auftragsticket übertragen. Bei vorhandener Berechtigung können die in dem Auftragsticket vorhandenen Aufgaben, beispielsweise Parametrieraktionen oder Durchführen von Funktionstest, mit dem Feldgerät bearbeitet werden.

Feldgeräte, welche mit solchen Bediensystemen verwaltet werden können, müssen nach der Auslieferung an den Kunden mit den zu verwaltenden Einheiten (Benutzerverwaltungssystem in Form eines Ticketservers) verbunden werden. Dies passiert in der Regel durch einen Schlüsseltausch zwischen dem Feldgerät und der verwaltenden Einheit, welcher vom Kunden manuell durchgeführt werden muss. Das Feldgerät sendet hierfür eine Join-Anfrage an die zu verwaltende Einheit. Ein Benutzer muss anschließend die Freigabe manuell bestätigen. Bei einer Vielzahl von Feldgeräten ist das ein nicht zu unterschätzender Personal- und Kostenaufwand, welcher zudem fehleranfällig sein kann, da die Fehlerquelle "Mensch" Feldgeräte versehentlich falsch einordnen könnte. Zudem besteht ein Risiko für Manipulation und/oder Cyber-Angriffe, beispielsweise indem ein Angreifer eigene Feldgeräte ans Netz bringt und eine Join-Anfrage sendet, um damit Informationen über Benutzer und Rechte zu erhalten.

Ausgehend von dieser Problematik liegt der Erfindung die Aufgabe zugrunde, Feldgeräte auf einfache Art und Weise mit einem Bediensystem mit Benutzerverwaltung zu verbinden.

Die Aufgabe wird durch ein Computerimplementiertes Verfahren zum Trainieren eines KI-Modells gelöst, wobei das Verfahren umfasst:
- Bereitstellen von Trainingsdaten, wobei die Trainingsdaten Eingangsdaten und Ausgangsdaten umfassen, wobei die Eingangsdaten Identifikations- und/oder Funktionsdaten einer Vielzahl von Feldgeräten umfassen, und wobei die Ausgangsdaten jeweils ein den Feldgeräten zugeordnetes Ergebnis, ob ein Anmelden an einem Benutzermanagementsystem erlaubt wurde oder nicht, umfassen;
- Zuführen der Trainingsdaten dem KI-Modell; und
- Trainieren des Kl-Modells mittels maschinellen Lernens auf Basis der Trainingsdaten zum Identifizieren von einem oder mehreren Zusammenhängen zwischen den Identifikations- und/oder Funktionsdaten und den jeweils zugeordneten Ergebnissen.

Die Erfindung unterstellt, dass im Zuge der Anlagenplanung bzw. -Projektierung gewisse Strukturen oder Regeln existieren, sogenannte Identifikations- und/oder Funktionsdaten, welche für jedes der Feldgeräte zur Verfügung stehen. Zudem stehen die Informationen bereits, welche der Feldgeräte dem Benutzermanagementsystem hinzugefügt werden durften, und welche nicht. Mit diesen Trainingsdaten wird ein KI-Modell eingelernt, bzw. trainiert, um Muster oder Zusammenhänge zu identifizieren, welche Feldgeräte hinzugefügt werden dürfen, und welche nicht. Dadurch lässt sich ein zuverlässiges Entscheidungssystem etablieren.

Feldgeräte, welche im Zusammenhang mit der Erfindung genannt werden, sind bereits im einleitenden Teil der Beschreibung beispielhaft aufgeführt worden.

Eine erste Variante des Verfahrens sieht vor, dass ein Benutzer jedem der Feldgeräte manuell ein Ergebnis zuweist, wobei die dadurch entstehenden Trainingsdaten dem KI-Modell gesammelt als Trainingsdatensatz oder jeweils nach erfolgter Zuweisung einzeln zugeführt werden.

Gemäß einer zweiten Variante des Verfahrens ist es vorgesehen, dass die Trainingsdaten dem Kl-Modell gesammelt als zumindest ein Trainingsdatensatz zugeführt werden.

In beiden Varianten identifiziert das KI-Modell durch dieses sogenannte beaufsichtigte Lernen ("Supervised Learning") nach und nach die Zusammenhänge zwischen den Identifikations- und/oder Funktionsdaten, indem es die Entscheidungen des Benutzers nachzuahmen lernt und so einen Klassifikator ausbildet.

Gemäß einer Ausgestaltung können Trainingsdaten auch dadurch generiert werden, durch Einteilen der Identifikations- und/oder Funktionsdaten in Teilmengen, wobei ein Benutzer jeder Teilmenge ein Ergebnis zuweist, wobei die Trainingsdatensätze jeweils aus einer der Teilmengen der Identifikations- und/oder Funktionsdaten und dem dieser Teilmenge zugeordneten Ergebnis bestehen. In einer Ausgestaltung der zweiten Variante des Verfahrens ist hierfür vorgesehen, dass das Einteilen der Identifikations- und/oder Funktionsdaten in die Teilmengen mit Hilfe eines weiteren Kl-Modells erfolgt. Hierbei handelt es sich um ein zum eigentlichen, im Verfahren verwendeten Kl-Modell verschiedenes KI-Modell. Das weitere KI-Modell arbeitet hierbei nach dem sogenannten unbeaufsichtigten Lernen ("Unsupervised Learning", auch "Clustering" genannt), bei welchem die vielen, bereits vorhandenen Identifikations- und/oder Funktionsdaten auf Gemeinsamkeiten und/oder Auffälligkeiten untersucht werden und darauf basierend in die Teilmengen eingruppiert werden.

Gemäß einer vorteilhaften Ausgestaltung des Verfahrens ist vorgesehen, dass das KI-Modell auf einem neuronalen Netzwerk basiert. Insbesondere handelt es sich um ein Perceptron- oder "Feed Forward"-Netzwerk. Ein solches neuronales Netzwerk weist hierfür eine Eingangsschicht, eine Ausgangsschicht und ausreichend Schichten (sogenannte "hidden layers") mit jeweils einer Vielzahl von Knotenpunkten, bzw. Neuronen, zwischen der Eingangs- und der Ausgangsschicht auf. Die Eingangsschicht weist ein oder mehrere Knotenpunkte, bzw. Neuronen, zur Eingabe der Identifikations- und/oder Funktionsdaten auf. Die Ausgangsschicht weist einen Knotenpunkt, bzw. ein Neuron, auf, welcher das Ergebnis als "erlaubt" oder "nicht erlaubt" ausgibt. Alternativ kann auch eine Ausgangsschicht vorgesehen sein, welches für jede Möglichkeit ("erlaubt" oder "nicht erlaubt") einen numerischen Ausgang verwendet, welcher jeweils die Wahrscheinlichkeit für diesen Wert darstellt. Beispielsweise wird bei 55% Wahrscheinlichkeit für "erlaubt" und 45% Wahrscheinlichkeit für "nicht erlaubt" ein genaueres Hinsehen, bzw. Prüfen benötigt, während bei 99% bzw. 1% mehr Vertrauen in das Ergebnis des Modells besteht.

Für das weitere KI-Modell wird ebenfalls ein neuronales Netzwerk verwendet.

Gemäß einer Ausgestaltung des Verfahrens ist es vorgesehen, dass die Identifikations- und/oder Funktionsdaten eine oder mehrere der folgenden Datenkategorien umfassen:
- Benennung einer Messstelle, TAG
- Netzwerkadresse des Feldgeräts;
- Herstellername
- Gerätetyp;
- Seriennummer;
- Gerätename.

Für den Fachmann ist ersichtlich, dass auch weitere Identifikations- und/oder Funktionsdaten, die sich auf ein Feldgerät, eine Messstelle oder ein Netzwerk der Anlage beziehen, für die Trainingsdaten verwendet werden können, um einen Zusammenhang mit einer Entscheidung des Benutzers identifizieren zu können. Beachtet werden muss, dass die Trainingsdaten eine ausreichend große Menge solcher Daten aufweisen (bevorzugt mindestens 1000 verschiedene Daten pro Kategorie, besonders bevorzugt mindestens 10.000 verschiedene Daten pro Kategorie).

Des Weiteren wird die Aufgabe durch ein Verwenden eines KI-Modells, welches mittels des erfindungsgemäßen Verfahrens trainiert wurde, in einem Verfahren zur Benutzerverwaltung von Feldgeräten der Automatisierungstechnik gelöst, wobei das Verfahren umfasst:
- Bekanntmachen eines Benutzermanagementsystems in einer Anlage der Automatisierungstechnik durch Aussenden von Einladungstelegrammen an zumindest ein in der Anlage eingesetztes Feldgerät;
- Senden einer Anmeldungsanfrage des Feldgeräts an das Benutzermanagementsystem als Reaktion auf das Einladungstelegramm, welche Anmeldungsanfrage Identifikations- und/oder Funktionsdaten des Feldgeräts enthält;
- Prüfen der Identifikations- und/oder Funktionsdaten durch das Benutzermanagementsystem mithilfe des KI-Modells dahingehend, ob sich das Feldgerät am Benutzermanagementsystem anmelden darf; und
- Anmelden des Feldgeräts am Benutzermanagementsystem im Falle, dass die Prüfung ein erfolgreiches Ergebnis liefert.

Somit kann zuverlässig entschieden werden, ob ein neues Feldgerät dem Benutzermanagementsystem hinzugefügt werden darf, oder nicht. Das Verfahren ist schnell durchführbar und weist eine hohe Genauigkeit auf.

Eine Ausgestaltung der Verwendung sieht vor, dass ein Benutzer vor dem Schritt des Prüfens der Identifikations- und/oder Funktionsdaten durch das Benutzermanagementsystem mithilfe des Kl-Modells zuerst manuell prüft, ob sich das Feldgerät am Benutzermanagementsystem anmelden darf, wobei das Anmelden des Feldgeräts am Benutzermanagementsystem nur in dem Falle erfolgt, dass die Prüfung durch den Benutzer und die Prüfung durch das KI-Modell jeweils ein erfolgreiches Ergebnis liefert. Das KI-Modell dient also zur Überprüfung, bzw. Kontrolle der manuellen Entscheidung des Benutzers über die Anmeldung und liefert eine Zweitmeinung. Dadurch kann die Sicherheit und Zuverlässigkeit bei manuellen Entscheidungen des Benutzers erhöht werden.

Wird dem KI-Modell vertraut, so kann nach dessen Entscheidung ein Feldgerät auch automatisiert am Benutzermanagementsystem angemeldet werden, ohne dass hierfür die Hilfe eines Menschen benötigt wird.

Gemäß einer Ausgestaltung der Verwendung ist vorgesehen, dass das zumindest eine Feldgerät und das Benutzermanagementsystem über ein lokales Netzwerk oder über das Internet in Kommunikationsverbindung stehen. Die Kommunikationsverbindung kann dabei drahtgebunden oder drahtlos ausgestaltet sein. Als lokales Netzwerk kann in der drahtgebundenen Variante beispielsweise ein Ethernet-basiertes Netzwerk verwendet werden. Alternativ kann ein Feldbus der Automatisierungstechnik, insbesondere basierend auf einem der Standards Profibus PA/DP, Foundation Fieldbus, o,ä, verwendet werden. Im Falle der drahtlosen Ausgestaltung kann bspw. ein Netzwerk basierend auf einem der Standards WiFi, WirelessHART, ZigBee oder Bluetooth verwendet werden.

Die Aufgabe wird des Weiteren durch ein computerlesbares Medium gelöst, das Anweisungen kodiert, die ein KI-Modell definieren, das mittels des erfindungsgemäßen Verfahrens eingelernt wurde.

Die Aufgabe wird des Weiteren durch ein Computersystem gelöst, umfassend ein erfindungsgemäßes computerlesbares Medium. Das Computersystem führt das KI-Modell aus und/oder trainiert das KI-Modell und kann dadurch das Trainingsverfahren, als auch die Verwendung des trainierten Kl-Modells im Entscheidungsverfahren ausführen. Bei dem Computersystem kann es sich beispielsweise um das Benutzermanagementsystem handeln, welches lokal in Anlagennähe angeordnet ist und beispielsweise per LAN-Verbindung mit der Anlage und den darin befindlichen Feldgeräten und/oder Bedieneinheiten kommunizieren kann. Alternativ ist das Benutzermanagementsystem cloudbasiert ausgestaltet und per Internet kontaktierbar. Alternativ handelt es sich bei dem Computersystem, welches das KI-Modell trainiert und/oder ausführt nicht um das Benutzermanagementsystem, sondern um eine separate Komponente.

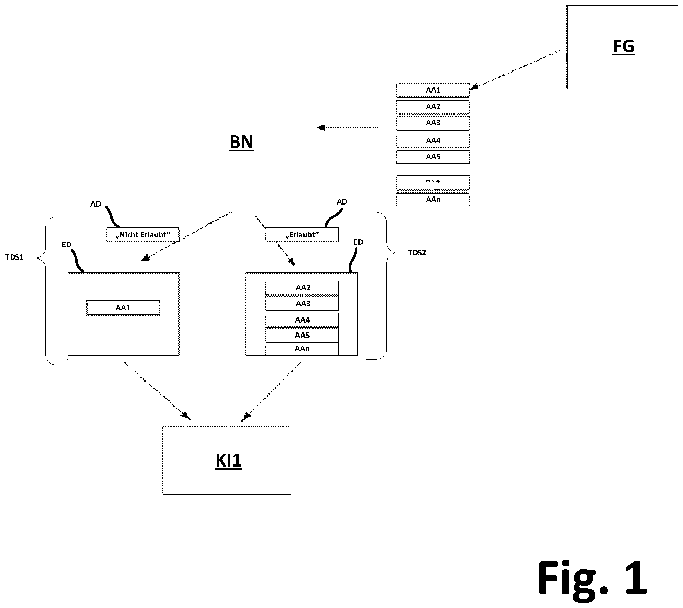

Die Erfindung wird anhand der nachfolgenden Figuren näher erläutert. Es zeigen
Fig. 1: ein erstes Ausführungsbeispiel des erfindungsgemäßen Verfahrens, in welchem ein Kl-Modell mittels Trainingsdaten eingelernt wird; und
Fig. 2: ein Ausführungsbeispiel zum Generieren von Trainingsdaten.

Sollen Feldgeräte FG einem Benutzermanagementsystem, beispielsweise einem Ticketserver hinzugefügt werden, so sendet das Benutzermanagementsystem Einladungstelegramme über alle dem Benutzermanagementsystem zur Verfügung stehenden Kommunikationsverbindungen. Diejenigen Feldgeräte FG, welche zur Verwaltung über das Benutzermanagementsystem kompatibel sind, senden Anmeldungsanfragen AA1, ..., AAn als Antworttelegramm zurück an das Benutzermanagementsystem.

Ein Benutzer BN, beispielsweise ein Admin des Benutzermanagementsystems muss nun die einzelnen Anmeldungsanfragen AA1, ..., AAn prüfen und einzeln entscheiden, ob das jeweilige Feldgerät FG dem Benutzermanagementsystem hinzugefügt wird.

Die perfekte und sichere Auswahl eines Feldgeräts FG würde auf dem exakten Vergleich eines Schlüssels, insbesondere eines ED25519-Schlüssels beruhen. Dies ist jedoch nicht praktikabel, da zum einen diese Schlüssel im Vorfeld nicht bekannt sind und zudem von Menschen aufgrund der großen Zeichenanzahl nicht handhabbar sind. Daher versucht der Benutzer BN, andere Informationen aus der Anmeldungsanfrage eines Feldgeräts FG zu verwenden.

Für die konkrete Prüfung eines Feldgeräts FG zieht der Benutzer BN vorzugsweise die Parameter aus der Gruppe "PostalAddress" zu Rate, welche ein Teil der Anmeldungsanfragen AA1, ..., AAn sind. Im Folgenden ist ein Auszug der "PostalAddress" aus einer Anmeldungsanfrage AA1, ..., AAn abgebildet:

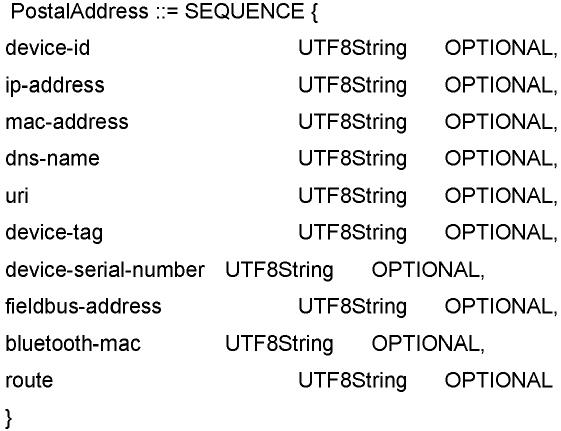

Diese "PostalAddress" enthält ein oder mehrere Identifikations- und/oder Funktionsdaten, die zur Identifikation des Feldgerätes an sich oder der Funktion in der konkreten Anlage dienen oder die Art der Kommunikationsanbindung des Feldgeräts FG im Anlagennetzwerk beschreiben. (Im vorliegenden Beispiel enthaltene Identifikations- und/oder Funktionsdaten sind beispielsweise die Netzwerkadresse des Feldgeräts FG (="fieldbus-addres" oder "ip-address", der Gerätename (="device-id", etc.) oder ähnliches. Diese Aufzählung stellt nur einen Auszug der in den Anmeldungsanfragen AA1, ..., AAn enthaltenen Identifikations- und/oder Funktionsdaten dar. Es kann vorgesehen sein, dass die Anmeldungsanfragen AA1, ..., AAn alternative und/oder zusätzliche Datenfelder zu der "PostalAddress" enthalten, in welchen ebenfalls Identifikations- und/oder Funktionsdaten enthalten sind.

Der Benutzer beginnt nun, für die einzelnen Feldgeräte FG zu entscheiden, welche Feldgeräte FG für die Anmeldung am Benutzermanagementsystem zugelassen werden, und welche zurückgewiesen werden. Das bedeutet, dass der Benutzer BN diese Daten labelt. Konkret labelt er die Daten, in denen er ein Ergebnis "erlaubt" oder "nicht erlaubt", in Bezug auf die Anmeldung am Benutzermanagementsystem, zuweist. Die gelabelten Daten werden fortan "Trainingsdaten" genannt. Trainingsdaten enthalten also somit die Identifikations- und/oder Funktionsdaten eines Feldgeräts FG als Eingangsdaten ED und das Ergebnis, bzw. das Label als Ausgangsdaten AD. Diese Trainingsdaten werden nach der Erstellung nach und nach einem Kl-Modell KI1 zugeführt und für das Einlernen des KI-Modells KI1 verwendet. Die Trainingsdaten können auch als Trainingsdatensätze TD1, TD2 gesammelt werden und dem KI-Modell KI1 zugeführt werden.

Das KI-Modell KI1 basiert insbesondere auf einem neuronalen Netzwerk. Insbesondere handelt es sich um ein Perceptron- oder "Feed Forward"-Netzwerk. Ein solches neuronales Netzwerk weist hierfür eine Eingangsschicht, eine Ausgangsschicht und ausreichend Schichte (sogenannte "hidden layers") mit jeweils einer Vielzahl von Knotenpunkten, bzw. Neuronen, zwischen der Eingangs- und der Ausgangsschicht auf. Die Eingangsschicht weist ein oder mehrere Knotenpunkte, bzw. Neuronen, zur Eingabe der Identifikations- und/oder Funktionsdaten. Die Ausgangsschicht weist einen Knotenpunkt, bzw. ein Neuron, auf, welcher das Ergebnis als "erlaubt" oder "nicht erlaubt" ausgibt.

Mittels der Trainingsdaten kann das KI-Modell KI1 trainiert werden. Im Zuge des sogenannten maschinellen Lernens lernt das KI-Modell KI1 dabei Muster, welche für die Entscheidung relevant sind. Das KI-Modell KI1 lernt also Zusammenhängen zwischen den Eingangsdaten ED (den Identifikations- und/oder Funktionsdaten) und den jeweils zugeordneten Ausgangsdate AD (den Ergebnissen der Bewertung des Benutzers BN).

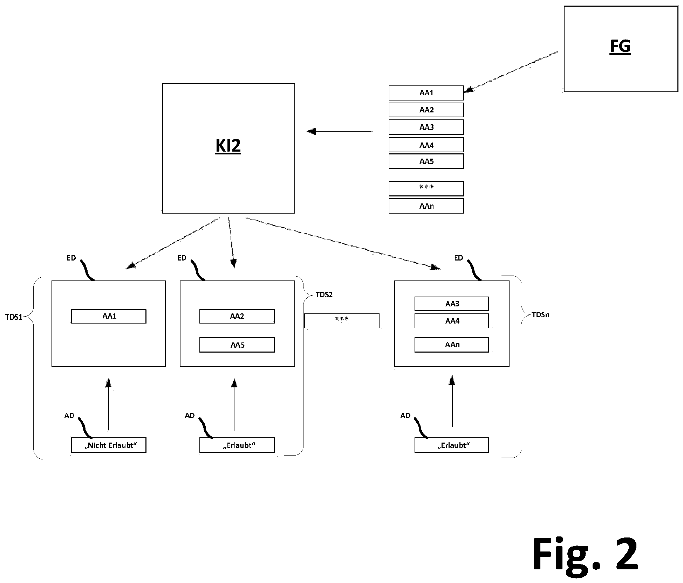

In Fig. 2 ist ein weiteres Beispiel beschrieben, wie die Trainingsdatensätze TDS1, ..., TDSn, welche dem KI-Modell KI1 zum Einlernen zugeführt werden, erstellt werden. In diesem Beispiel sind bereits eine Vielzahl von Anmeldungsanfragen AA1, ..., AAn von einer Vielzahl von Feldgeräten FG nach der der Inbetriebnahme der Anlage beim Benutzermanagementsystem eingetroffen. Ein weiteres Kl-Modell KI2, welches auf Clusterdetektion/Mustererkennung arbeitet, analysiert diese Anmeldungsanfragen AA1, ..., AAn und beginnt diese zu clustern. Dabei findet eine Einteilung in mehrere (abstrakte) Cluster, bzw. Gruppen statt. Beispielsweise gleichen sich bestimmte Einträge der Identifikations- und/oder Funktionsdaten aller in einer Gruppe befindlichen Anmeldungsanfragen AA1, ..., AAn.

Anschließend wird der Benutzer BN aktiv labelt jede dieser Gruppen mit dem Ergebnis "erlaubt" oder "nicht erlaubt". Somit wird aus jeder Gruppe ein Trainingsdatensatz TDS1, ..., TDSn erstellt.

Im weiteren Verlauf können alle Feldgeräte FG, deren Anmeldungsanfrage AA1, ..., AAn sich in einer Gruppe mit dem Ergebnis "erlaubt" befindet, dem Benutzermanagementsystem zugelassen werden. Des Weiteren werden die einzelnen Trainingsdatensätze TDS1, ..., TDSn an das KI-Modell KI1 zum Trainieren übergeben.

Das trainierte KI-Modell KI1 kann im Anschluss das Gelernte anwenden und den Benutzer in der Entscheidungsfindung für neue Feldgeräte unterstützen oder ersetzen. Dafür untersucht das Kl-Modell eine Anmeldungsanfrage AA1, ..., AAn eines neuen Feldgeräts FG.

"Unterstützen" des Benutzers BN bedeutet, dass das KI-Modell eine Zweimeinung, zusätzlich zu der manuellen Entscheidung des Benutzers BN erstellt. Die manuelle Entscheidung des Benutzers BN kann dadurch von dem KI-Modell KI1 bestätigt oder widerlegt werden.

"Ersetzen" des Benutzer BN bedeutet, dass das KI-Modell die alleinige Entscheidungsmacht über das Zulassen oder Ablehnen eines Feldgeräts FG zur Anmeldung am Benutzermanagementsystem besitzt. Der Anmeldevorgang kann dadurch auch automatisiert durchgeführt werden.

Die Erfindung verspricht den Vorteil, dass eine Zeiteinsparung bei der Anmeldung von Feldgeräten FG an einem Benutzermanagementsystem erzielt werden kann, bei einer gleichzeitig erhöhten Zuverlässigkeit bei der Entscheidungsqualität gegenüber einem menschlichen Benutzer BN als entscheidende Instanz.

### Bezugszeichenliste

- AA1, ..., AAn: Anfrageantworten
- AD: Ausgangsdaten
- BN: Benutzer
- ED: Eingangsdaten
- FG: Feldgerät
- KI1: KI-Modell
- KI2: weiteres KI-Modell
- TDS1, ..., TDSn: Trainingsdatensätze

## Patentansprüche

1. Computerimplementiertes Verfahren zum Trainieren eines KI-Modells (KI1), umfassend:
- Bereitstellen von Trainingsdaten, wobei die Trainingsdaten Eingangsdaten (ED) und Ausgangsdaten (AD) umfassen, wobei die Eingangsdaten (ED) Identifikations- und/oder Funktionsdaten einer Vielzahl von Feldgeräten (FG) umfassen, und wobei die Ausgangsdaten (AD) jeweils ein den Feldgeräten (FG) zugeordnetes Ergebnis, ob ein Anmelden an einem Benutzermanagementsystem erlaubt wurde oder nicht, umfassen;
- Zuführen der Trainingsdaten dem KI-Modell (KI1); und
- Trainieren des KI-Modells (KI1) mittels maschinellen Lernens auf Basis der Trainingsdaten zum Identifizieren von einem oder mehreren Zusammenhängen zwischen den Identifikations- und/oder Funktionsdaten und den jeweils zugeordneten Ergebnissen.

2. Verfahren nach Anspruch 1, wobei ein Benutzer (BN) jedem der Feldgeräte (FG) manuell ein Ergebnis zuweist, wobei die dadurch entstehenden Trainingsdaten dem KI-Modell (KI1) jeweils nach erfolgter Zuweisung einzeln zugeführt werden.

3. Verfahren nach Anspruch 1, wobei die Trainingsdaten dem KI-Modell (KI1) gesammelt als zumindest ein Trainingsdatensatz (TDS1, ..., TDSn) zugeführt werden.

4. Verfahren nach Anspruch 3, wobei die Identifikations- und/oder Funktionsdaten in Teilmengen eingeteilt werden, wobei ein Benutzer (BN) jeder Teilmenge ein Ergebnis zuweist, wobei der Trainingsdatensatz, bzw. die Trainingsdatensätze (TDS1, ..., TDSn) jeweils aus einer der Teilmengen der Identifikations- und/oder Funktionsdaten und dem dieser Teilmenge zugeordneten Ergebnis bestehen.

5. Verfahren nach Anspruch 4, wobei das Einteilen der Identifikations- und/oder Funktionsdaten in die Teilmengen mit Hilfe eines weiteren Kl-Modells (KI2) erfolgt.

6. Verfahren nach einem der vorherigen Ansprüche, wobei das KI-Modell (KI1) auf einem neuronalen Netzwerk basiert.

7. Verfahren nach einem der vorherigen Ansprüche, wobei die Identifikations- und/oder Funktionsdaten eine oder mehrere der folgenden Datenkategorien umfassen:
- Benennung einer Messstelle, TAG
- Netzwerkadresse des Feldgeräts (FG);
- Herstellername
- Gerätetyp;
- Seriennummer;
- Gerätename.

8. Verwenden eines KI-Modells (KI1), welches mittels eines Verfahrens nach einem der Ansprüche 1 bis 7 trainiert wurde, in einem Verfahren zur Benutzerverwaltung von Feldgeräten (FG) der Automatisierungstechnik, wobei das Verfahren umfasst:
- Bekanntmachen eines Benutzermanagementsystems in einer Anlage der Automatisierungstechnik durch Aussenden von Einladungstelegrammen an zumindest ein in der Anlage eingesetztes Feldgerät (FG);
- Senden einer Anmeldungsanfrage (AA1, ..., AAn) des Feldgeräts (FG) an das Benutzermanagementsystem als Reaktion auf das Einladungstelegramm, welche Anmeldungsanfrage (AA1, ..., AAn) Identifikations- und/oder Funktionsdaten des Feldgeräts (FG) enthält;
- Prüfen der Identifikations- und/oder Funktionsdaten durch das Benutzermanagementsystem mithilfe des KI-Modells (KI1) dahingehend, ob sich das Feldgerät (FG) am Benutzermanagementsystem anmelden darf; und
- Anmelden des Feldgeräts (FG) am Benutzermanagementsystem im Falle, dass die Prüfung ein erfolgreiches Ergebnis liefert.

9. Verwendung nach Anspruch 8, wobei ein Benutzer (BN) vor dem Schritt des Prüfens der Identifikations- und/oder Funktionsdaten durch das Benutzermanagementsystem mithilfe des Kl-Modells (KI1) zuerst manuell prüft, ob sich das Feldgerät (FG) am Benutzermanagementsystem anmelden darf, wobei das Anmelden des Feldgeräts (FG) am Benutzermanagementsystem nur in dem Falle erfolgt, dass die Prüfung durch den Benutzer (BN) und die Prüfung durch das Kl-Modell (KI1) jeweils ein erfolgreiches Ergebnis liefert.

10. Verwendung nach Anspruch 8 oder 9, wobei das zumindest eine Feldgerät (FG) und das Benutzermanagementsystem über ein lokales Netzwerk oder über das Internet in Kommunikationsverbindung stehen.

11. Verwendung nach Anspruch 10, wobei die Kommunikationsverbindung drahtgebunden oder drahtlos ausgestaltet ist.

12. Computerlesbares Medium, das Anweisungen kodiert, die ein KI-Modell (KI1) definieren, das mittels eines Verfahrens nach einem der Ansprüche 1 bis 7 eingelernt wurde.

13. Computersystem, umfassend ein computerlesbares Medium nach Anspruch 12.
